**Europäisches Patentamt**

**European Patent Office**

**Office européen des brevets**

(11) Veröffentlichungsnummer : **0 467 874 A1**

(12) **EUROPÄISCHE PATENTANMELDUNG**

(21) Anmeldenummer : **91890137.2**

(22) Anmeldetag : **02.07.91**

(51) Int. Cl.⁵ : **C22B 7/02, C22B 1/24, C22B 1/216**

(30) Priorität : **03.07.90 AT 1413/90**

(43) Veröffentlichungstag der Anmeldung :
**22.01.92 Patentblatt 92/04**

(84) Benannte Vertragsstaaten :
**BE CH DE DK ES FR GB GR IT LI LU NL SE**

(71) Anmelder : **VOEST-ALPINE STAHL DONAWITZ GESELLSCHAFT M.B.H.**
**Pestalozzistrasse 128 Postfach 1**
**A-8700 Leoben-Donawitz (AT)**
Anmelder : **VOEST-ALPINE STAHL LINZ Gesellschaft m.b.H.**
**Turmstrasse 45**
**A-4020 Linz (AT)**

(72) Erfinder : **Ludewig, Fritz, Dipl.-Ing.Dr.**
**Lorberaustrasse 13**
**A-8704 Leoben (AT)**
Erfinder : **Lugscheider, Walter, Dipl.-Ing.Dr.**
**Ziegelstrasse 9L**
**A-8045 Graz (AT)**
Erfinder : **Trimmel, Wolfgang, Dipl.-Ing.**
**Erzherzog-Johann-Strasse 5**
**A-8700 Leoben (AT)**
Erfinder : **Köller, Otto, Dipl.-Ing.**
**Kerpelystrasse 83**
**A-8700 Leoben (AT)**

(74) Vertreter : **Haffner, Thomas M., Dr. et al**
**Patentanwaltskanzlei Dipl.-Ing. Adolf Kretschmer Dr. Thomas M. Haffner**
**Schottengasse 3a**
**A-1014 Wien (AT)**

(54) **Verfahren zur Wiederverwendung von Hüttenstäuben sowie Vorrichtung zur Durchführung dieses Verfahrens.**

㊄ Bei einem Verfahren zur Wiederverwendung von Hüttenstäuben, insbesondere LD-Staub und anderen Stahlwerkstäuben bei der Stahlerzeugung, bei welchem der Staub in agglomerierter Form von oben in den Konverter (1) eingetragen wird, wird der im Konverter (1) entstehende Staub über einen Drehrohrofen (4) abgezogen, welchem im Gegenstrom dazu aus dem abgezogenen Staub gebildete Pellets aufgegeben werden. Hiebei wird über den Staubabzug (2) zusätzliche Verbrennungsluft in den Drehrohrofen (4) angesaugt.

FIG. 1

EP 0 467 874 A1

Die Erfindung bezieht sich auf ein Verfahren zur Wiederverwendung von Hüttenstäuben, insbesondere LD Staub und anderen Stahlwerkstäuben bei der Stahlerzeugung, bei welchem der Staub in agglomerierter Form von oben in den Konverter eingetragen wird sowie auf eine Vorrichtung zur Durchführung dieses Verfahrens.

Hüttenstäube der eingangs genannten Art fallen in relativ großen Mengen beim Stahlherstellungsprozeß an. Bei einem Sauerstoffblasverfahren entstehen beispielsweise bei Verwendung eines 100 t - Konverters bis zu 2 t Staub, welche in der Folge entsorgt oder wiederverwendet werden müssen. Der entstehende Hüttenstaub enthält in der Regel eine Reihe von Elementen bzw. Verbindungen, welche eine Entsorgung nur auf Sonderdeponien ermöglichen. Die Wiederverwendung der Stäube setzt in der Regel aufwendige Einrichtungen voraus.

Hüttenstäube müssen vor einer Wiederverwendung einer Aufbereitung unterworfen werden. Bekannte Verfahren zur Aufbereitung von Hüttenwerksstäuben umfassen ein Pelletieren oder Brikettieren der Stäube um den neuerlichen Einsatz der Pellets bzw. Briketts bei der Stahlerzeugung zu ermöglichen. Der Aufwand für das Agglomerieren derartiger Stäube ist aber in der Regel sehr hoch, so daß bereits Vorschläge gemacht wurden, die Stäube in pulverförmigem Zustand neuerlich zu verwenden. Ein derartiger Vorschlag ist der DE-OS 37 34 892 zu entnehmen, wobei sich ein derartiges Verfahren nicht ohne weiteres für sauerstoffblasende Konverter eignet. Eine weitere Möglichkeit, Hüttenwerksstäube zu entsorgen, besteht darin, diese Stäube in der Schlacke dauerhaft und deponierfähig einzubinden, wie dies der DE-OS 38 17 845 zu entnehmen ist.

Der DE-OS 3 427 631 ist ein Verfahren zur Wiedergewinnung von Zink und Blei aus Eisen- und Stahlstaub zu entnehmen. Hiebei wird das zink- und bleihaltige Einsatzmaterial in einem Drehrohrofen in einer reduzierenden Atmosphäre erhitzt, wobei das Zink und Blei verdampft und in der Folge wiedergewonnen wird.

Die EP-A1-0 176 499 beschreibt ein Verfahren zur Rückgewinnung von Metallen aus metalloxidhaltigen Hüttenstäuben, bei welchem die Hüttenstäube in einem Drehrohrofen gemeinsam mit kohlenstoffhaltigen Material erhitzt werden. Die hiebei verdampften Metalle werden in der Folge in reduzierender Atmosphäre ausgetragen.

Die EP-A1 0 217 139 beschreibt ebenfalls ein Verfahren zum Aufarbeiten von zink- und bleihaltigen Reststoffen der Stahlindustrie, bei welchem die Reststoffe mit thermisch inerten Zusatzstoffen und mit backender Steinkohle als Bindemittel bei Temperaturen von ca. 490°c brikettiert werden.

Prinzipiell können Hüttenwerksstäube entweder staubförmig über die Bodendüsen eines bodenblasenden Konverters gemeinsam mit dem Blassauerstoff eingetragen werden oder aber in agglomerierter Form ebenso wie andere stückige Zuschläge von oben in den Konverter eingesetzt werden. Insbesondere die Verwendung von Stäuben in agglomerierter Form ermöglicht es, den Sauerstoff sowohl über die Bodendüsen als auch von oben über eine Blaslanze in das Stahlbad einzublasen. Die Sauerstoffzufuhr wird bei Verwendung von agglomerierten Stäuben somit nicht beeinflußt, wobei allerdings vorausgesetzt wird, daß der agglomerierte Staub absolut trocken ist. Im Stahlherstellungsprozeß eingesetzte Grünpellets zerfallen, durch den Restfeuchtegehalt bedingt, in der Schaumschlacke schlagartig zu Staub und derartiger Staub kann teilweise von der Schlacke gebunden werden. Gleichzeitig bringt der Restfeuchtegehalt derartiger Grünpellets die Gefahr von Knallgasexplosionen im Konverter mit sich, welche zu Schlackenauswürfen Anlaß geben können. Schließlich können zu feuchte Zuschläge oder Kühlmittel einen erhöhten Wasserstoffgehalt im Rohstahl zur Folge haben. Aus den genannten Gründen wurden als Staubagglomerate bisher in erster Linie Staubbriketts in Betracht gezogen. Eine derartige Brikettierung ist aber ein kostenaufwendiger Agglomerationsprozeß. Die Briketts, welche einen hohen Gehalt an nicht hydratisiertem Kalk aufweisen müssen, müssen sofort nach der Herstellung verarbeitet werden, da eine Zwischenlagerung wegen des sogenannten "Kalktreibens" nicht möglich ist.

Die Erfindung zielt nun darauf ab, ein Verfahren der eingangs genannten Art zu schaffen, mit welchem Hüttenstäube ohne den aufwendigen Brikettierprozeß dem Konverter wiederum rückgeführt werden können und mit welchem insbesondere die Möglichkeit geschaffen wird, einen hohen Anteil der entstehenden Hüttenstäube in den Stahlherstellungsprozeß rückzuführen. Zur Lösung dieser Aufgabe besteht die erfindungsgemäße Verfahrensweise im wesentlichen darin, daß der im Konverter entstehende Staub über einen Drehrohrofen abgezogen wird, welchem im Gegenstrom dazu aus dem abgezogenen Staub gebildete Pellets aufgegeben werden, und daß über den Staubabzug zusätzliche Verbrennungsluft in den Drehrohrofen angesaugt wird. Dadurch, daß die Hüttenstäube gemeinsam mit den im wesentlichen vollständig verbrannten Konverterabgasen abgezogen werden, erfolgt eine vollständige Trocknung und Vorwärmung der dem Konverter rückzuführenden Staubpellets. Mit dieser Trocknung und Vorwärmung der rückzuführenden Staubpellets wird gleichzeitig eine Befeuchtung der Konverterabgase erzielt, wodurch die für die nachfolgende Gasreinigung üblicherweise erforderliche Gasbefeuchtung für die elektrostatische Reinigung entfallen kann. Dadurch, daß die dem Konverter rückgeführten Pellets in einem derartigen Drehrohrofen relativ hohen Temperaturen ausgesetzt sind und eine relativ große Menge hoch erhitzter Abgase zur Verfügung steht, wie sie bei der Frischung von Roheisen mit Sauerstoff entsteht, können im Drehrohrofen auch endotherme Prozesse, wie beispielsweise eine weitergehende Reduktion von Eisenoxiden sowie die Verflüchtigung von Zink über intermediär gebildeten Zink-

3

dampf und ähnliche Reaktionen ablaufen, wobei es in diesem Falle lediglich vorteilhaft ist, ähnlich wie bei einem Wälzofen kohlenstoffhältige Staubpellets einzusetzen. Im Gegensatz zu konventionellen Wälzöfen wird aber durch die Verwendung eines Drehrohrofens die Kranzbildung im Ofen nicht durch überschüssigen Kohlenstoff sondern durch überschüssigen Kalk am besten durch Verwendung kalkumhüllter Pellets verhindert. Das bei der Reduktion von Eisenoxiden bzw. des Zinkoxides gebildete CO verbrennt hiebei restlos in der heißen oxidierenden Atmosphäre über der Pelletschicht im Ofen, so daß auch die Grenzwerte für den CO-Gehalt der Abgase leichter eingehalten werden können. Teilreduzierte Erz- bzw. LD-Staubpellets können bei den erzielbaren Temperaturen, insbesondere bei Temperaturen zwischen 1000 und 1100°C im Konverter problemlos fertig reduziert werden und aufschmelzen, wobei an der Eintragstelle im Vergleich zum Eintrag von kaltem Material nur eine geringe Abkühlung auftritt. Die Kühlwirkung von Eisenoxiden ist wesentlich größer als die Kühlwirkung von Schrott wie er gleichfalls in Stahlprozessen üblicherweise zugesetzt wird. Schrott wird nach Möglichkeit als Kühlmittel verwendet, um die Stahlmenge je t eingesetzten Roheisens zu maximieren. Auch Eisenschwamm kann mit Vorteil als Kühlmittel eingesetzt werden, wobei Eisenschwamm zunächst aufgrund der hohen Herstellungskosten durch vorreduzierte Eisenerze ersetzt wird. Vorreduzierte Eisenerze liegen in ihrer Kühlwirkung zwischen Eisenerzen und Schrott, wobei die Kühlwirkung sich dann, wenn vorreduziertes Material heiß eingesetzt wird, der Kühlwirkung von Schrott nähert. Die Rückführung von vorgewärmten Staubpellets läßt sich somit ohne nennenswerte thermische Probleme im Stahlprozeß durchführen, wobei allerdings zu beachten ist, daß sich der Zink- und Bleioxidgehalt der Stäube bei einer Rückführung gemäß der erfindungsgemäßen Verfahrensweise in den abgezogenen Stäuben sukzessive erhöht. Ein Anstieg des Zinkoxid- bzw. Bleioxidgehaltes im Einsatzcode würde in der Folge aufgrund der endothermen Verflüchtigungsreaktionen zu einer zunehmenden Verlagerung der Verflüchtigung der genannten Oxide vom Drehrohrofen in den Konverter führen, so daß der Konverter bei Verwendung von Staub mit höherem Zinkoxid- bzw. Bleioxidgehalt einen immer größer werdenden Wärmebedarf für die Reduktion der genannten Oxide und die Verdampfung der Metalle erfordert. Die Kühlwirkung des Einsatzgutes nimmt somit mit zunehmendem Anreicherungsgrad von Zinkoxid und Bleioxid in den Stäuben zu und es ist daher erfindungsgemäß besonders vorteilhaft, das Verfahren so zu führen, daß der Zn- und Pb-Oxidgehalt der abgezogenen Stäube überwacht wird, und daß bei Überschreiten vorbestimmter Konzentrationswerte für die Zn- und Pb-Oxide der Staub vor der Pelletierung ausgeschleust wird.

Um eine weitgehende Vorreduktion im Drehrohrofen sicherzustellen und den Konverter von derartigen Reaktionen zu entlasten, werden mit Vorteil kohlenstoffhältige und/oder hydratkalkgebundene Pellets in den Drehrohrofen eingesetzt, wobei, wie bereits oben erwähnt, wesentlich geringere Mengen an Kohlenstoff gegenüber bekannten Wälzöfen eingesetzt werden können, so daß die geforderten CO-Werte leicht eingehalten werden können.

Abgesehen von der bei Überschreiten von Grenzwerten in bezug auf den Bleioxid- bzw. Zinkoxidgehalt jeweils erforderlichen Ausschleusung einer Teilmenge der Stäube kann das erfindungsgemäße Verfahren im wesentlichen so geführt werden, daß die dem Konverter rückgeführte agglomerierte Staubmenge im wesentlichen gleich der abgezogenen Staubmenge gewählt wird, wobei durch die unmittelbare Kopplung des Drehrohrofens mit dem Konverter eine wesentlich wirtschaftlichere Verwendung der gebildeten Stäube bei gleichzeitig einfacher Agglomerierung, wie beispielsweise Pelletierung, ermöglicht wird.

Wie bereits eingangs erwähnt, steigt das Stahlausbringen naturgemäß mit zunehmendem Metallisierungsgrad des Kühlmittels. Durch die Verwendung eines Drehrohrofens kann der Kohlenstoffzusatz beispielsweise in Form von Koksgries gemeinsam mit Feinkalk eingebracht werden, wobei ein derartig mitchargierter Feinanteil ein Zusammenkleben der Pellets und ein Haften der Pellets bzw ihrer Bruchstücke an der Drehrohrofenwand verhindert. Der Kokszusatz zum rückzuführenden pelletierten Staub wird hiebei so hoch gewählt, daß nach einem Abtrennen des Feinanteils in den Pellets so viel Kohlenstoff verbleibt, daß der Reduktionseinschmelzvorgang im Konverter praktisch ohne thermische Belastung des Stahlbades, d.h. ohne Entzug von Wärme aus dem Stahlbad erfolgen kann. Der Wärmebedarf für die Restreduktion von Eisenoxiden in den Pellets und die Einschmelzung von gebildetem Eisenschwamm wird durch das Wärmeangebot der Kohlenstoffpartialverbrennung zu CO gedeckt und es können daher Pellets mit Kohlenstoffgehalten unmittelbar eingesetzt werden, welche als neutrokalorisch bezeichnet werden können.

Wenn es aus betrieblichen Gründen vorteilhaft ist, Kühlmittel wie beispielsweise Schrott oder vorreduziertes Erz chargenweise und nicht kontinuierlich zuzusetzen und einen derartigen Zusatz beispielsweise erst ab dem Einsetzen der Schaumschlackenbildung vorzunehmen, erfolgt der chargenweise Zusatz von Kühlmitteln üblicherweise zum Zeitpunkt der größten Wärmeentwicklung, d.h. zum Zeitpunkt der maximalen Kohlenstoffabbrandgeschwindigkeit oder knapp davor. Um hier das Stahlausbringen zu maximieren, wird als Kühlmittel Schrott oder vorreduziertes Erz zumeist in Brikettform eingesetzt. Um eine derartige bewährte Verfahrensweise auch im Rahmen des erfindungsgemäßen Verfahrens bei Verwendung eines unmittelbar mit dem Konverter verbundenen Drehrohrofens aufrecht erhalten zu können, kann es vorteilhaft sein, die im Drehrohr reduzierten Eisenoxide in Pelletform nach einer Absiebung des Feingutes in noch heißem Zustand zu brikettieren. Bei einer derartigen Verfahrensweise wird der Drehrohrofen zur weiteren Vorreduzierung und Vorwärmung eingesetzt, um unmittelbar die Brikettierwärme zu erzielen. Die erfindungsgemäße Verfahrensweise kann hiebei so weitergebildet werden, daß aus dem Drehrohrofen in den Konverter auszutragende agglomerierte Stäube vor der Aufgabe in den Konverter einer Siebung unterworfen werden, und daß das Feingut der Siebung der Pelletierung rückgeführt oder einer Brikettierung unterworfen wird.

Die erfindungsgemäße Vorrichtung zur Durchführung dieses Verfahrens besteht hiebei im wesentlichen darin, daß an den Konverter ein Drehrohrofen angeschlossen ist, dessen Achse in Richtung zum Konverter geneigt angeordnet ist, daß der Drehrohrofen über eine Gashaube mit dem Konverter verbunden ist und daß an der Gashaube und/oder am Anschluß des Drehrohrofens an die Gashaube Lufteintrittsöffnungen vorgesehen sind. Da die Absaugung von beim Frischprozeß entstehenden Stäuben unter Aufrechterhaltung eines geringen Unterdruckes gegenüber dem Außendruck erfolgt, kann über die Ringspalte am Anschluß der Drehrohrofens an die Gashaube oder an die nachfolgende Staubkammer bzw. Abgasreinigung Außenluft angesaugt werden, wobei ein derartiges Ansaugen von Außenluft nicht zuletzt deshalb keine störenden Einflüsse aufweist, da die Konvertergase ohnedies weitestgehend verbrannt sind.

Um bei einer derartigen Einrichtung das Ausschleusen von rückzuführenden Material für eine gegebenenfalls vorgesehene Brikettierung zu ermöglichen, ist die Vorrichtung mit Vorteil so ausgebildet, daß an den Anschluß des Drehrohrofens an die Gashaube ein trichterförmiger Stutzen angeschlossen ist, welcher mit einer Siebvorrichtung verbunden ist. Die Rückführung derartiger Briketts kann in konventioneller Weise zu dem jeweils günstigsten Zeitpunkt vorgenommen werden, wobei die Ausbildung mit Vorteil so getroffen ist, daß in der Gashaube Öffnungen für die Durchführung wenigstens einer Blaslanze und die Aufgabe von rückgeführten Briketts und/oder Zuschlagsstoffen vorgesehen sind.

Der in der Siebvorrichtung abgeschiedene Feinanteil besteht überwiegend aus überschüssigem Kohlenstoff, Eisenabrieb und feinteiligem Brandkalk. Der abgetrennte Feinanteil einer derartigen Siebung läßt sich daher in einfacher Weise neuerlich mit dem abgezogenen LD-Staub vermengen und wieder zu Pellets verarbeiten, wobei der Grobanteil, bestehend aus überwiegend metallisierten LD-Staubpellets mit Beimengungen von Reduktionskohle, Kalk und nicht vollständig reduzierten Eisenoxiden in noch heißem Zustand zu Heißbriketts verarbeitet werden kann. Da eine derartige Ausschleusung zum Zwecke der Brikettherstellung auf denjenigen Zeitpunkt beschränkt werden kann, zu welchem tatsächlich Briketts benötigt werden, entfällt hier die problematische Zwischenlagerung und es können die gebildeten Briketts mit der Brikettierwärme in den Konverter aufgegeben werden. Die Rückführung von Pellets kann im Rahmen des erfindungsgemäßen Verfahrens mit der erfindungsgemäßen Vorrichtung im wesentlichen kontinuierlich vorgenommen werden, wobei bei gleichzeitig günstiger Wärmebilanz absolut trockene agglomerierte Stäube rückgeführt werden können.

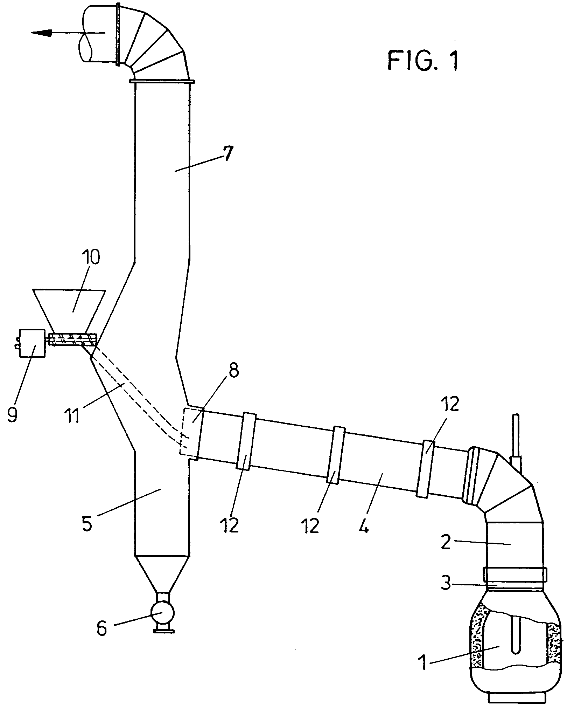

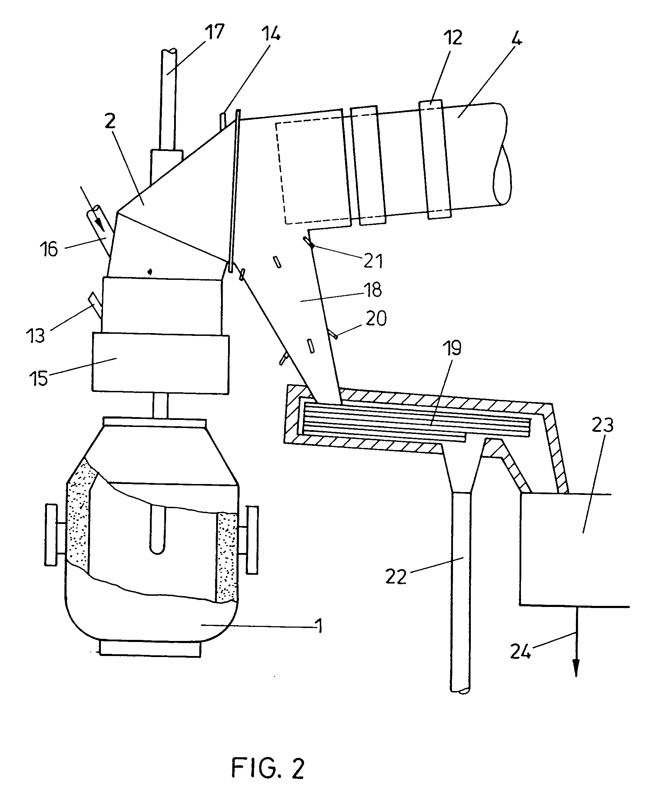

Die Erfindung wird nachfolgend an Hand von in der Zeichnung dargestellten Ausführungsbeispielen der erfindungsgemäßen Vorrichtung zur Durchführung des erfindungsgemäßen Verfahrens näher erläutert. In dieser zeigen Fig. 1 eine schematische Seitenansicht einer ersten Ausgestaltung der erfindungsgemäßen Vorrichtung zur Wiederverwendung von Hüttenstäuben und Fig. 2 eine abgewandelte Ausbildung mit chargenweise Zusatz von Brikettbrandkalk bzw. Flußmittel.

In Fig. 1 ist mit 1 ein LD-Konverter bezeichnet, an dessen oberen Ende eine Staubabzugshaube 2 angeschlossen ist. Die Staubabzugshaube 2 ist hiebei so ausgebildet, daß am Übergang zwischen dem Konverter 1 und der Abzugshaube 2 Ringspalten 3 vorgesehen sind, über welche Außenluft in einen an die Abzugshaube 2 angeschlossenen Drehrohrofen 4 eingesaugt werden kann. Durch diese Luftansaugung durch die Ringspalte 3 werden aus dem Konverter 1 austretende mit Staub beladene Abgase durch den feuerfest zugestellten Drehrohrofen 4 mit einem geringen Unterdruck gesaugt und durch die an dem der Abzugshaube 2 abgewandten Ende des Drehrohrofens 4 befindlichen Staubkammer 5 über eine Austragsschleuse 6 aus dem System ausgetragen. Das von dem LD-Staub befreite Abgas wird in der Folge über das Gasaustrittsrohr 7 einer nicht gezeigten Gasreinigung zugeführt. Nachdem in dem gesamten System ein geringer Unterdruck aufrecht erhalten werden soll, kann über zusätzliche sich im Anschlußbereich des Drehrohrofens 4 an die Staubkammer 5 befindliche Ringspalte 8 zusätzliche Luft in das Abgassystem eingesaugt werden. Im Gegenstrom zu dem Abgasstrom werden in den Drehrohrofen 4 über einen mit einem Getriebemotor 9 ausgestatteten Aufgabetrichter 10 durch ein Aufgaberohr 11 aus dem Konverterstaub gebildete Grünpellets dem Drehrohrofen 4 aufgegeben. Die Grünpellets werden hiebei im Gegenstrom zu dem Abgasstrom durch den Drehrohrofen 4 geführt, wobei sie neben einer Vorwärmung gleichzeitig getrocknet werden. Durch diese Trocknung der Grünpellets sind sie für den Einsatz in einen Konverter 1 bedeutend besser geeignet, da beim Einbringen von getrockneten Pellets ein übermäßiges Schäumen, wie dies beim Einbringen von Grünpellets der Fall wäre, vermieden wird.

Um die Drehbewegung des Drehrohrofens 4 auch im heißen Zustand stoppen zu können, ist der Ofen mit einer ausreichenden Anzahl an Laufringen 12 ausgestattet. Die Anzahl der Laufringe 12 ist hiebei so gewählt, daß der Ofen sich auch im heißen Zustand nicht durchbiegen kann.

In Fig. 2, welche eine andere Variante der erfindungsgemäßen Einrichtung darstellt, sind die Bezugszeichen von Fig. 1 beibehalten worden. Bei dieser Ausbildung ist die Staubabzugshaube 2 als Doppelmantel ausgebildet und mit einer Kühlung versehen. Die Zuführungs- bzw. Abzugsstutzen des Kühlwassers sind hiebei schematisch mit 13 und 14 bezeichnet. Darüber hinaus ist die Staubabzugshaube 2 beweglich ausgebildet und besitzt eine Schürze 15, welche von dem oberen Ende des Konverters 1 abgehoben werden kann um ein Kippen des Konverters 1 zur Entleerung desselben zu ermöglichen. Des weiteren ist in der Abzugshaube 2 eine Aufgabeschurre 16 für den Zusatz von Heißbriketts als Kühlmittel bzw. für den Zusatz von anderen Zuschlagsstoffen zu dem Konverter 1 vorgesehen. Die Abzugshaube 2 wird hiebei ebenso wie die in Fig. 1 gezeigte Ausbildung von einer Blaslanze 17 für die Sauerstoffzufuhr in den Konverter durchsetzt.

Im Bereich der Verbindung des Drehrohrofens 4 mit der Abzugshaube 2 ist bei der Ausbildung nach Fig. 2 ein trichterförmiger Stutzen 18 vorgesehen, über welchen das getrocknete, feinkörnige Material einer Siebvorrichtung 19 zugeführt wird. Der trichterförmige Stutzen 18 ist hiebei wiederum als Doppelmantel ausgebildet und mit Anschlußstutzen für eine Wasserkühlung 20 und 21 versehen. In der Siebvorrichtung 19, welche vorteilhafterweise als Vibrationssieb ausgebildet ist, wird der durch das Sieb 19 hindurchtretende Feinanteil über eine Austragseinrichtung 22 ausgetragen und entweder neuerlich einer Pelletierung zugeführt oder wiederum dem Drehrohrofen 4 aufgegeben. Der Siebüberlauf des Vibrationssiebes 19, der vorwiegend aus Pellets mit einem hohen Metallisierungsgrad besteht, wird einer schematisch angedeuteten Brikettpresse 23 zugeführt und zu Briketts verpreßt. Diese als Kühlmittel verwendbaren Heißbriketts werden über die schematisch mit 24 angedeutete Austragseinrichtung ausgetragen und im noch heißen Zustand im Falle der Erfordernis eines Kühlmittels dem Konverter 1 über die Aufgabeschurre 16 zugeführt.

**Patentansprüche**

1.  Verfahren zur Wiederverwendung von Hüttenstäuben, insbesondere LD Staub und anderen Stahlwerkstäuben bei der Stahlerzeugung, bei welchem der Staub in agglomerierter Form von oben in den Konverter (1) eingetragen wird, dadurch gekennzeichnet, daß der im Konverter (1) entstehende Staub über einen Drehrohrofen (4) abgezogen wird, welchem im Gegenstrom dazu aus dem abgezogenen Staub gebildete Pellets aufgegeben werden, und daß über den Staubabzug (2) zusätzliche Verbrennungsluft in den Drehrohrofen (4) angesaugt wird.

2.  Verfahren nach Anspruch 1, dadurch gekennzeichnet, daß kohlenstoffhältige und/oder hydratkalkgebundene Pellets in den Drehrohrofen (4) eingesetzt werden.

3.  Verfahren nach Anspruch 1 oder 2, dadurch gekennzeichnet, daß die dem Konverter (1) rückgeführte agglomerierte Staubmenge im wesentlichen gleich der abgezogenen Staubmenge gewählt wird.

4.  Verfahren nach einem der Ansprüche 1, 2 oder 3, dadurch gekennzeichnet, daß der Zn- und Pb-Oxidgehalt der abgezogenen Stäube überwacht wird, und daß bei Überschreiten vorbestimmter Konzentrationswerte für die Zn- und Pb-Oxide der Staub vor der Pelletierung ausgeschleust wird.

5.  Verfahren nach einem der Ansprüche 1 bis 4, dadurch gekennzeichnet, daß aus dem Drehrohrofen (4) in den Konverter (1) auszutragende agglomerierte Stäube vor der Aufgabe in den Konverter (1) einer Siebung unterworfen werden, und daß das Feingut der Siebung der Pelletierung rückgeführt oder einer Brikettierung unterworfen wird.

6.  Verfahren nach einem der Ansprüche 1 bis 5, dadurch gekennzeichnet, daß die Pellets im Drehrohrofen (4) wenigstens teilweise reduziert werden.

7.  Verfahren nach einem der Ansprüche 1 bis 6, dadurch gekennzeichnet, daß in den Drehrohrofen (4) mit den Pellets Kalk und gegebenenfalls Flußmittel eingebracht werden.

8.  Vorrichtung zur Durchführung des Verfahrens nach einem der Ansprüche 1 bis 7, dadurch gekennzeichnet, daß an den Konverter (1) ein Drehrohrofen (4) angeschlossen ist, dessen Achse in Richtung zum Konverter (1) geneigt angeordnet ist, daß der Drehrohrofen (4) über eine Gashaube (2) mit dem Konverter (1) verbunden ist und daß an der Gashaube (2) und/oder am Anschluß des Drehrohrofens (4) an die Gashaube (2) Lufteintrittsöffnungen vorgesehen sind.

9. Vorrichtung nach Anspruch 8, dadurch gekennzeichnet, daß an den Anschluß des Drehrohrofens (4) an die Gashaube ein trichterförmiger Stutzen (18) angeschlossen ist, welcher mit einer Siebvorrichtung (19) verbunden ist.

10. Vorrichtung nach einem der Anspruch 8 oder 9, dadurch gekennzeichnet, daß in der Gashaube (2) Öffnungen für die Durchführung wenigstens einer Blaslanze ( 17 ) und die Aufgabe (16) von rückgeführten Briketts und/oder Zuschlagsstoffen vorgesehen sind.

FIG. 1

FIG. 2

# EUROPÄISCHER RECHERCHENBERICHT

Nummer der Anmeldung

EP   91 89 0137

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-A-3 734 892 (EVERTZ)<br>--- | | C22B7/02<br>C22B1/24<br>C22B1/216 |
| A,D | DE-A-3 817 845 (WEG WALZWERK EUSKIRCHEN GMBH)<br>--- | | |
| A,D | EP-A-0 217 139 (LABORLUX S.A.)<br>--- | | |
| A,D | EP-A-0 176 499 (VOEST-ALPINE AG)<br>--- | | |
| A,D | DE-A-3 427 631 (SUMITOMO METAL MINING CO, LTD)<br><br>----- | | |
| | | | **RECHERCHIERTE SACHGEBIETE (Int. Cl.5)**<br><br>C22B |

Der vorliegende Recherchenbericht wurde für alle Patentansprüche erstellt

| Recherchenort | Abschlußdatum der Recherche | Prüfer |
|---|---|---|
| DEN HAAG | 31 OKTOBER 1991 | WITTBLAD U.A. |